# EUROPEAN PATENT SPECIFICATION

(11) **EP 1 879 307 B1**
(45) Date of publication and mention of the grant of the patent: **08.10.2008**
(21) Application number: 06300793.4
(22) Date of filing: 11.07.2006
(51) Int. Cl.: H04B 10/00, H04J 14/02

(54) **Method and apparatus for protecting a network link**
Verfahren und Vorrichtung zum Schutz einer Netzverbindung
Procédé et dispositif pour protéger une liaison de réseau

(43) Date of publication of application: 16.01.2008
(73) Proprietor: Alcatel Lucent, 75008 Paris (FR)
(72) Inventor: Grammel, Gert, DE-71254, Ditzingen (DE)
(74) Representative: Rausch, Gabriele

(56) References cited:
- EP-A- 1 628 423
- WO-A-20/04077715

## Description

### Field of the Invention

The present invention relates to the field of telecommunications and more particularly to an apparatus and related method for protecting an optical fiber link in a transmission network.

### Background of the Invention

In transmission networking, the term protection generally refers to the capability to automatically switch from a working resource to a redundant (protection) resource in the case of a failure. 1 +1 line protection, which is the most common case of protection in transmission networks, means that for each working connection a dedicated protection connection is provided.

A protected signal is broadcasted at two ports over two fibers in parallel. In the case of a failure such as a cable breakage, the receiver side can simply switch to receive the protected signal from the protection link. This requires, however, an optical protection switch, which represents an unprotected potential malfunction source (i.e. unreliable), or consumes additional I/O ports and matrix capacity (i.e. costly) if protection switching is performed in the switch matrices of the terminating network elements.

EP 1 628 423 A1 discloses a network element according to the preample of claim 1. Active and protection signals have different wavelengths and are directed to corresponding optical fibers using an arrayed waveguide grating. Switch-over in the case of a failure is effected by tuning the wavelength of the transmitter. This requires wavelength tunable light sources.

WO 2004/077715 describes a protection arrangement in which working signals are transmitted between network elements via a first communication path. The protection signals are transmitted continuously or in case of a fault at the same wavelength as the working signals via a second communication path of an optical network while the polarization of the protection signals is adjusted orthogonal to the polarization of additional working signals which are transmitted at the same wavelength via sections of the second communication path such that no wavelengths need to be kept clear for protection signals.

It is therefore an object of the present invention to provide an apparatus and related method which allows protection switching in transmission network in a more reliable or less costly way.

### Summary of the Invention

These and other objects that appear below are achieved by a network element having at least one optical transmitter for transmitting a protected optical signal. According to the invention, the transmitter is tunable with respect to at least one optical property of its output signal and is connected to an input of a passive optical device capable of directing optical signals of a first state or first value range of the optical property to a first output connectable to a working fiber link and of directing optical signals of a second state or second value range of the optical property to a second output connectable to a protection fiber link. The network element further has a control device that tunes the transmitter from the first state or first value range of the optical property to the second state or second value range upon detection of a failure.

The tunable optical property of the optical transmitter is the polarization of the optical output signal. Accordingly, the passive optical element is a polarization filter.

A passive optical element has a by far higher reliability of maybe a factor 100 than an active protection switch. On the other hand, it requires only about half the costs or doubles capacity as compared to a protection solution that uses separate I/O interfaces and performs switch-over in a switch matrix of the terminating network elements.

Another particular advantage is that with the present invention power consumption and heat dissipation is drastically reduced as compared to classical protection arrangements, since no additional power is necessary to power the protection connection.

### Brief Description of the Drawings

Preferred embodiments of the present invention will now be described with reference to the accompanying drawings in which
- figure 1: shows transmission of a protected optical signal between a first and a second network element;
- figure 2: shows switch-over from active to protection fiber after occurrence of a failure in the example of figure 1;
- figure 3: shows the extension of the first embodiment to bidirectional signal transmission; and
- figure 4: shows switch-over from active to protection fiber after occurrence of a failure in the example of figure 3.

### Detailed Description of the Invention

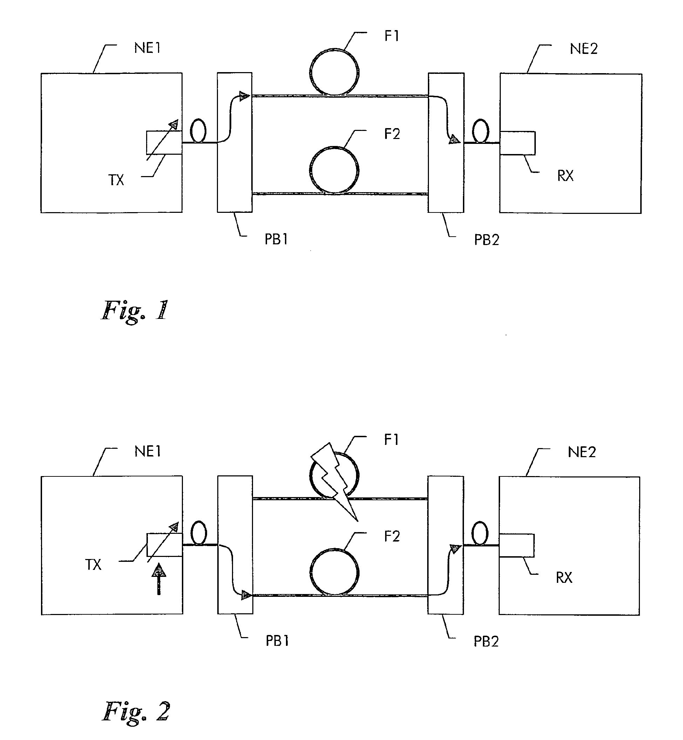

A basic implementation of the present invention is shown as a first embodiment in figures 1 and 2. A first and a second network element NE1, NE2 are interconnected by a working fiber F1 and a protection fiber F2. Network element NE1 has a transmitter TX and network element NE2 has a receiver RX. It should be noted that both network elements NE1, NE2 can have and typically have further transmitters and receivers, which are not important for the understanding of the invention and are therefore not shown in figures 1 and 2 for the sake of clarity.

Network element NE1 contains a first passive protection box PB1 and network element NE2 contains a second passive protection box PB2, the function of which will be described below.

Passive protection box PB1 has an input which is connected to transmitter TX and two outputs connected to the active fiber and to the protection fiber, respectively. Equally, protection box PB2 has an optical output connected to the receiver RX and two inputs connected to the active fiber and to the protection fiber, respectively. It should be noted that both protection boxes can typically have a number of further inputs and outputs connected to various other external fibers and internal receivers and transmitter, but which are not important for the understanding of the invention and are therefore not shown in figures 1 and 2 for the sake of clarity. Alternatively, there could also be provided a plurality of discrete passive protection boxes instead of one compound box.

Transmitter TX of network element NE1 is tunable with respect to the polarization of the output signal.

According to a basic idea of the invention, the passive optical protection box PB 1 is provided to direct a protected output signal in dependence of its tunable optical signal property to either of the working and protection fibers. Protection box PB2 on the other hand collects the protected signal from either the active or protection fiber and feeds it to receiver RX of receive end network element NE2. Since the protection box is a merely passive optical component, it is not prone to failures and hence has a very high reliability.

In the first embodiment, the transmitter TX is tunable with respect to the polarization of the output signal. This can be achieved using a simple laser that emits non-polarized signals and a controllable polarization filter. Accordingly, protection box PB1 contains a polarization filter with two outputs for optical signals with mutually orthogonal polarization state.

In the case of a failure on the working fiber, for example due to a fiber breakage, the transmitter TX is simply tuned by a corresponding controller (not shown) to change its polarization state, for example from a horizontally polarized signal state to a vertically polarized signal state. The polarization filter in protection box PB1 directs signals of horizontal polarization to the working fiber and signals of vertical polarization to the protection fiber. Such polarization filter with two outputs can be implemented using a polarization dependant splitter or a branched waveguide with two simple mutually orthogonal polarization filters.

Figure 1 shows signal flow from network element NE1 to network element NE2 during failure free operation. Signal flow is over the working fiber F1. In figure 2, a fiber breakage has occurred on the working fiber F1. Hence transmitter TX is tuned (indicated by a bold arrow below transmitter TX) to the orthogonal polarization state and signal flow hence is directed over the protection fiber F2.

A failure once detected at NE2 can be communicated to NE1 using a protection protocol such as K1/K2 signaling in SDH/SONET or similar protocol or can be communicated via a central or distributed control plane.

As an alternatively to linear polarization, circular polarization can equally be applied to distinguish and redirect the output signal in the protection case using appropriate polarization filters in the passive protection box PB1.

The purpose of receive side protection box PB2 is simply to couple the two fibers F1, F2 to the receiver RX, which can be achieved through a simple optical coupler, irrespective of the polarization state of the received signal. Polarization independent operation at the receive end is preferred in the first embodiment, since polarization is typically not maintained over a long fiber distance.

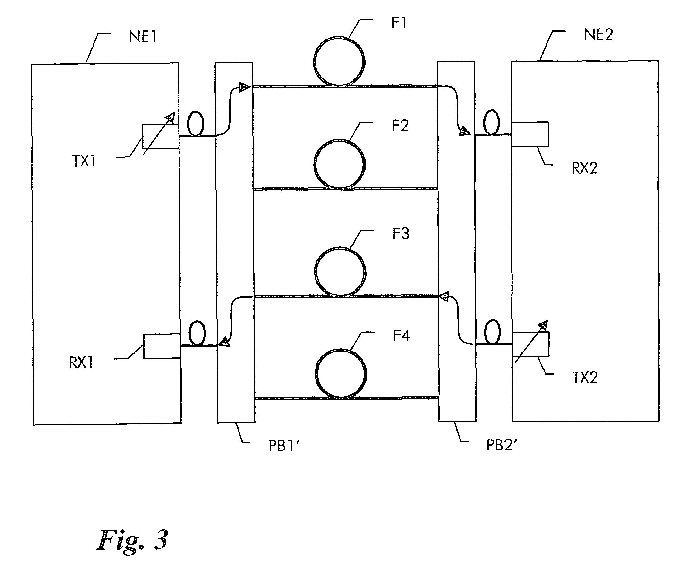

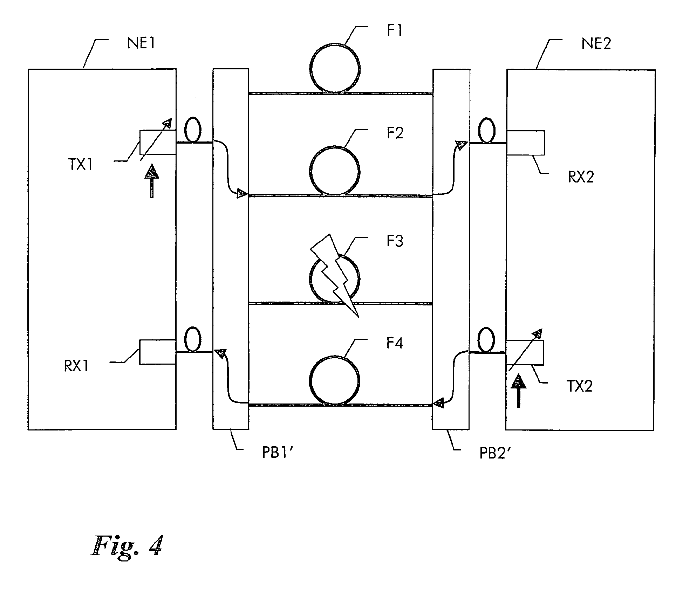

The embodiment of figures 1 and 2 considers only the direction of transmission from NE1 to NE2. However, optical signal transmission is typically bidirectional. Therefore, figures 3 and 4 are amended by a return direction from network element NE2 back to NE1.

Network element NE1 has a transmitter TX1 and a receiver RX1; NE2 has a transmitter TX2 and a receiver RX2. Signal transmission in both directions is protected. Therefore, four optical fibers F1-F4 are provided between the two network elements NE1, NE2. In particular fibers F1 and F2 are the working and protection fiber, respectively, in direction from left to right while fibers F3 and F4 are the working and protection fiber, respectively, in return direction from right to left.

Both passive protection boxes PB1' and PB2' operate in a similar manner as described with reference to figures 1 and 2 but combine functions in receive and transmit direction.

Transmitters TX1 and TX2 in both network elements NE1, NE2 are tunable with respect to the polarization state of their output signals.

In regard to the first embodiment, the question may arise how network element NE1 could know about the fiber breakage in the working fiber F1. Obviously such failure can be communicated from network element NE2 to NE1 using some kind of protection protocol such as K1/K2 byte signaling in SDH/SONET. Alternatively, a failure can be communicated via a central or even a distributed network management system. However, such signaling especially over network management might be time consuming and requires hardware and software effort to be implemented.

This can be avoided in the second embodiment. In figure 4 is shown that fiber F3 is affected by a failure. F3 is the working fiber in direction from NE2 to NE1. As a consequence, NE1 will detect a loss of signal at receiver RX1. This event can be used as a trigger to tune transmitter TX1 from horizontal to vertical polarization state. Signal from NE1 to NE2 passes hence over protection fiber F2.

Receiver RX2 will detect the change in polarization state. Even though polarization is not maintained over a long fiber distance, the action of changing the polarization state at TX1 will still be detectable at RX2. Alternatively, passive protection box PB2' could incorporate some detection means to detect on which fiber a signal is received and inform NE2 accordingly. We can still call such functionality passive as it concerns only a simple monitoring for the presence or absence of a signal but does not influence neither the signal nor the basic functionality of the protection box. So, even in the event of a malfunction of the signal monitoring, the passive functionality of redirecting protected signals in transmit direction and of coupling signals from active and protection fiber to a single receiver in receive direction would still be operational.

Hence, provided that RX2 detects the change in signal state, this event can be taken as a trigger for NE2 to tune the polarization in transmitter TX2 to the orthogonal state, e.g. from horizontal to vertical, and hence cause the signal in return direction to pass via fiber F4 as shown in figure 4.

In other words, if a failure occurs in only one direction, both directions are switched autonomously to their respective protection resources.

It should be noted that such autonomous protection switching can be supplemented and backed by a protection protocol so that in the unlikely event that the change in protection state would not be detectable at the receive side, a switch over would still be initiated through a signaling using the protection protocol. Further it should be clear that such protection switching can be revertive or non-revertive.

Having understood the basic concepts of the invention, it would be apparent to those skilled in the art, that various modifications and extensions could be made. For example, the invention could be applied in optical rings.

## Claims

1. A network element comprising at least one optical transmitter (TX; TX1, TX2) for transmitting a protected optical signal; wherein said transmitter (TX; TX1, TX2) is tunable with respect to at least one optical property of the output signal and is connected to an input of a passive optical device (PB1; PB2) capable of directing optical signals of a first state or first value range of said optical property to a first output connectable to a working fiber link (F1, F3) and of directing optical signals of a second state or second value range of said optical property to a second output connectable to a protection fiber link (F2, F4); said network element (NE1) further comprising means for tuning said transmitter (TX; TX1, TX2) from said first state or first value range of said optical property to said second state or second value range upon detection of a failure on said first fiber link (F1, F3),
**characterized in that**
said optical property is the polarization of the optical signal and wherein said passive optical device (PB1; PB2) is a polarization filter having two outputs for optical signals with mutually orthogonal polarization states.

2. A network element according to claim 1 further comprising an optical receiver (RX1, RX2) connected to an output of a receive end passive optical device (PB1, PB2) capable of directing optical signals of a first state or first value range of said optical property from a first input connectable to a working fiber (F1, F3) to said output and of directing optical signals of a second state or second value range of said optical property from a second input connectable to a protection fiber (F2, F4) to said output.

3. A method of transmitting a protected optical signal, comprising the steps of:
- providing a first fiber link (F1) and a second fiber link (F2);
- tuning in a transmit side network element (NE1) a transmitter (TX) transmitting said protected optical signal to a first state or first value range of an optical property of said signal;
- directing said optical signal to said first optical fiber using a passive optical device (PB1);
- in the case of a failure of said first fiber link (F1) tuning said transmitter (TX) to a second state or second value range of said optical property;
- directing said optical signal to said second optical fiber (F2) using said passive optical device (PB1); and
- at a receive side network element (NE2), receiving said protected optical signal from either said first or said second fiber link (F1, F2),
**characterized in that**
said optical property is the polarization of the optical signal and wherein said passive optical device (PB1; PB2) is a polarization filter having two outputs for optical signals with mutually orthogonal polarization states.

4. A method according to claim 3, wherein said failure condition is detected at said receive side network element (NE2) and communicated to said transmit side network element using a protection protocol.

5. A method according to claim 3, wherein a third and fourth network link (F3, F4) are provided for the transmission of a protected return signal and wherein said receive side network element (NE2) redirects said return signal from said third fiber link (F3) to said fourth fiber link (F4) responsive to detecting a loss of signal condition on said first optical fiber link (F2) and that said first network element (NE1) detects said step of redirecting and redirects said protected optical signal from said failed first fiber link (F1) to said second fiber link (F2) responsive to said detection.

## Patentansprüche

1. Ein Netzwerkelement, welches mindestens einen optischen Sender (TX; TX1, TX2) zum Senden eines geschützten optischen Signals umfasst; wobei der besagte Sender (TX; TX1, TX2) in Bezug auf mindestens eine optische Eigenschaft des Ausgangssignals einstellbar und an einen Eingang einer passiven optischen Vorrichtung (PB1; PB2) angeschlossen ist, welche fähig ist, optische Signale eines ersten Status oder eines ersten Messbereichs der besagten optischen Eigenschaft an einen ersten mit einer Hauptfaserverbindung (F1, F3) verknüpfbaren Ausgang zu leiten und optische Signale eines zweiten Status oder eines zweiten Messbereichs der besagten optischen Eigenschaft an einen zweiten mit einer Backup-Faserverbindung (F2, F4) verknüpfbaren Ausgang zu leiten; wobei das besagte Netzelement (NE1) weiterhin Mittel zum Einstellen des besagten Senders (TX; TX1, TX2) von dem besagten ersten Status oder ersten Messbereich der besagten optischen Eigenschaft auf den besagten zweiten Status oder zweiten Messbereich nach Erkennen einer Störung auf der besagten ersten Faserverbindung (F1, F3) umfasst,
**dadurch gekennzeichnet, dass**
die besagte optische Eigenschaft die Polarisierung des optischen Signals ist, und wobei die besagte passive optische Vorrichtung (PB1; PB2) ein Polarisierungsfilter mit zwei Ausgängen für optische Signale mit zueinander orthogonal polarisiertem Status ist.

2. Ein Netzelement nach Anspruch 1, welches weiterhin einen an einen Ausgang einer empfängerseitigen passiven optischen Vorrichtung (PB1, PB2) angeschlossenen optischen Empfänger (RX1, RX2) umfasst, welcher fähig ist, optische Signale eines ersten Status oder eines ersten Messbereichs der besagten optischen Eigenschaft von einem ersten an eine Hauptfaser (F1, F3) anschließbaren Eingang an den besagten Ausgang zu leiten, und optische Signale eines zweiten Status oder eines zweiten Messbereichs der besagten optischen Eigenschaft von einem zweiten an eine Backup-Faser (F2, F4) anschließbaren Eingang an den besagten Ausgang zu leiten.

3. Ein Verfahren zum Senden eines geschützten optischen Signals, welches folgende Schritte umfasst;
- Bereitstellen einer ersten Faserverbindung (F1) und einer zweiten Faserverbindung (F2);
- Einstellen in einem senderseitigen Netzelement (NE1) eines Senders (TX), welcher das besagte geschützte optische Signal an einen ersten Status oder einen ersten Messbereich einer optischen Eigenschaft des besagten Signals überträgt;
- Leiten des besagten optischen Signals an die besagte erste optische Faser unter Benutzung einer passiven optischen Vorrichtung (PB1);
- Im Fall einer Störung an der ersten Faserverbindung (F1), Einstellen des besagten Senders (TX) auf einen zweiten Status oder einen zweiten Messbereich der besagten optischen Eigenschaft;
- Leiten des besagten optischen Signals an die besagte zweite optische Faser (F2) unter Benutzung einer passiven optischen Vorrichtung (PB1); und
- An einem empfängerseitigen Netzwerkelement (NE2), Empfangen des besagten geschützten optischen Signals, entweder von der besagten ersten oder von der besagten zweiten Faserverbindung (F1, F2),
**dadurch gekennzeichnet, dass**
die besagte optische Eigenschaft die Polarisierung des optischen Signals ist, und wobei die besagte passive optische Vorrichtung (PB1; PB2) ein Polarisierungsfilter mit zwei Ausgängen für optische Signale mit zueinander orthogonal polarisiertem Status ist.

4. Ein Verfahren nach Anspruch 3, wobei der besagte Störungszustand am besagten empfängerseitigen Netzwerkelement (NE2) erkannt und dem besagten senderseitigen Netzwerkelement unter Anwendung eines Schutzprotokolls mitgeteilt wird.

5. Ein Verfahren nach Anspruch 3, wobei eine dritte und eine vierte Netzverbindung (F3, F4) für die Übertragung eines geschützten Rücksignals bereitgestellt werden, und wobei das besagte empfängerseitige Netzwerkelement (NE2) das besagte Rücksignal von der besagten dritten Faserverbindung (F3) an die besagte vierte Faserverbindung (F4) nach Erkennen eines Signalverlustzustands auf der besagten ersten Faserverbindung (F2) umleitet, und wobei das besagte erste Netzwerkelement (NE1) den besagten Schritt der Umleitung erkennt und das besagte geschützte optische Signal von der besagten gestörten ersten Faserverbindung (F1) an die besagte zweite Faserverbindung (F2) als Antwort auf die besagte Störungserkennung weiterleitet.

## Revendications

1. Elément de réseau comprenant au moins un émetteur optique (TX ; TX1, TX2) permettant de transmettre un signal optique protégé ; dans lequel ledit émetteur (TX ; TX1, TX2) est peut être accordé par rapport à au moins une propriété optique du signal de sortie et est relié à une entrée d'un dispositif optique passif (PB1 ; PB2) qui est capable de diriger les signaux optiques d'un premier état ou d'une première plage de valeurs de ladite propriété optique à une première sortie pouvant être reliée à une liaison par fibre optique en service (F1, F3) et de diriger les signaux optiques d'un second état ou d'une seconde plage de valeurs de ladite propriété optique à une seconde sortie pouvant être reliée à une liaison par fibre optique de protection (F2, F4) ; ledit élément de réseau (NE1) comprenant en outre des moyens permettant d'accorder ledit émetteur (TX ; TX1, TX2) depuis ledit premier état ou ladite première plage de valeurs de ladite propriété optique audit second état ou à ladite seconde plage de valeurs lors de la détection d'une défaillance sur ladite première liaison par fibre optique (F1, F3),
**caractérisé en ce que**
ladite propriété optique est la polarisation du signal optique et dans lequel ledit dispositif optique passif (PB1 ; PB2) est un filtre de polarisation ayant deux sorties pour les signaux optiques avec des états de polarisation mutuellement orthogonaux.

2. Elément de réseau selon la revendication 1 comprenant en outre un récepteur optique (RX1, RX2) relié à une sortie d'un dispositif optique passif d'extrémité de réception (PB1, PB2) qui est capable de diriger les signaux optiques d'un premier état ou d'une première plage de valeurs de ladite propriété optique depuis une première entrée pouvant être reliée à une fibre optique en service (F1, F3) à ladite sortie et de diriger les signaux optiques d'un second état ou d'une seconde plage de valeurs de ladite propriété optique depuis une seconde entrée pouvant être reliée à une fibre optique de protection (F2, F4) à ladite sortie.

3. Procédé permettant de transmettre un signal optique protégé, comprenant les étapes suivantes :
- fournir une première liaison par fibre optique (F1) et une seconde liaison par fibre optique (F2) ;
- accorder dans un élément de réseau côté transmission (NE1) un émetteur (TX) transmettant ledit signal optique protégé à un premier état ou à la première plage de valeurs d'une propriété optique dudit signal ;
- diriger ledit signal optique vers ladite première fibre optique en utilisant un dispositif optique passif (PB1) ;
- en cas de défaillance de ladite première liaison par fibre optique (F1) accorder ledit émetteur (TX) à un second état ou une seconde plage de valeurs de ladite propriété optique ;
- diriger ledit signal optique vers ladite seconde fibre optique (F2) en utilisant ledit dispositif optique passif (PB1) ; et
- au niveau d'un élément de réseau côté réception (NE2), recevoir ledit signal optique protégé depuis ladite première ou ladite seconde liaison par fibre optique (F1, F2),
**caractérisé en ce que**
ladite propriété optique est la polarisation du signal optique et dans lequel ledit dispositif optique passif (PB1 ; PB2) est un filtre de polarisation ayant deux sorties pour les signaux optiques avec des états de polarisation mutuellement orthogonaux.

4. Procédé selon la revendication 3, dans lequel ledit état de défaillance est détecté au niveau dudit élément de réseau côté réception (NE2) et communiqué audit élément de réseau côté transmission en utilisant un protocole de protection.

5. Procédé selon la revendication 3, dans lequel sont prévus pour la transmission d'un signal de retour protégé une troisième et une quatrième liaison de réseau (F3, F4) et dans lequel ledit élément de réseau côté réception (NE2) redirige ledit signal de retour depuis ladite troisième liaison par fibre optique (F3) vers ladite quatrième liaison par fibre optique (F4) réagissant à la détection d'une perte d'état de signal sur ladite première liaison par fibre optique (F2) et en ce que ledit premier élément de réseau (NE1) détecte ladite étape de redirection et redirige ledit signal optique protégé depuis ladite première liaison par fibre optique tombée en panne (F1) vers ladite seconde liaison par fibre optique (F2) réagissant à ladite détection.
